# FASCICULE DE BREVET EUROPEEN

(11) **EP 0 881 507 B1**
(45) Date de publication et mention de la délivrance du brevet: **12.01.2005**
(21) Numéro de dépôt: 98401256.7
(22) Date de dépôt: 27.05.1998
(51) Int. Cl.: G01T 1/169, G01T 7/00

(54) **Procédé et dispositif de localisation d'une source radioactive ponctuelle dans un site contaminé**
Verfahren und Vorrichtung zur Lokalisierung einer Strahlungsquelle in einer kontaminierten Umgebung
Method and apparatus for localizing a radiation source in a contaminated site

(30) Priorité: 28.05.1997 FR 9706526
(43) Date de publication de la demande: 02.12.1998
(73) Titulaire: Delta Protection, 30200 Bagnols-sur-Ceze (FR)
(72) Inventeur: Ozil, Samuel, 30650 Rochefort du Gard (FR)
(74) Mandataire: Schrimpf, Robert

(56) Documents cités:
- EP-A- 0 542 561
- WO-A-91/03744
- FR-A- 2 108 861
- US-A- 3 277 300
- US-A- 3 581 089

## Description

L'invention concerne la localisation d'une source radioactive ponctuelle dans un site contaminé.

Il est connu de déplacer un compteur sensible au rayonnement dans un site contaminé et de se baser sur les variations de la valeur représentative de la dose de rayonnement reçue par le compteur pour essayer de localiser la source du rayonnement.

Cette technique est peu précise et peut exiger un temps de séjour inacceptable dans le lieu exploré, notamment s'il ne s'agit que d'une première exploration de ce lieu avec un équipement de protection éventuellement sommaire.

La publication EP 0 542 561 décrit un dispositif de localisation qui comporte un véhicule équipé d'un compteur de radioactivité directionnel utilisé en combinaison avec un compteur omnidirectionnel.

La publication FR-A-2 108 861 décrit un procédé et un dispositif pour localiser une source radioactive ponctuelle dans un site contaminé par rapport à un individu intervenant sur le site. Ce dispositif est une ceinture dosimétrique comportant une série de goussets répartis dans l'épaisseur de la ceinture autour da la taille de l'utilisateur, chaque gousset contenant un élément détecteur, notamment à base de soufre.

La présente invention a pour objet un procédé et un dispositif simples qui utilisent également comme mobile un individu intervenant sur le site et qui lui permettent de déterminer rapidement la direction de la source.

Le procédé et le dispositif de l'invention sont définis respectivement dans la revendication 1 et dans la revendication 9.

Dans des réalisations particulières, on met en oeuvre une ou plusieurs des caractéristiques suivantes:
- on repartit des compteur dans un plan horizontal.
- on équipe l'intervenant de quatre compteurs répartis dans un plan horizontal autour d'un axe vertical en sorte que vus de cet axe, les compteurs soient deux à deux dans des directions opposées ou orthogonales.
- on dispose des compteurs en sorte qu'ils soient deux à deux symétriquement disposés par rapport à un axe vertical autour duquel l'intervenant peut tourner sur lui-même.
- on envoie les signaux des compteurs à une centrale à l'extérieur du site pour les collecter et les exploiter.

Dans une réalisation préférée, le dispositif comprend des compteurs dans un plan horizontal, et encore plus avantageusement, des compteurs répartis dans un plan horizontal autour du corps de l'intervenant et des compteurs situés respectivement au-dessus de sa tête et sous son menton.

Dans une réalisation typique, les compteurs sont montés sur une ceinture ventrale ou sur une pièce du vêtement de l'intervenant et/ou sur un harnais de tête.

Les moyens pour recevoir et traiter les signaux des compteurs sont portés par l'intervenant ou situés à distance et sont reliés à l'intervenant par une liaison électrique ou hertzienne.

Les moyens pour fournir des informations permettant à l'intervenant de s'orienter vers la source comprennent de préférence des moyens visuels ou des moyens auditifs.

Les moyens visuels sont constitués par exemple par un écran placé devant les yeux de l'observateur de façon à suivre les mouvements de la tête de l'observateur et qui présente des zones représentant les distributions relatives des compteurs et sur lesquelles s'affichent des indications représentatives des doses reçues par les compteurs.

Ces indications peuvent être des chiffres, des lettres, des dessins, des couleurs.

Les informations des compteurs peuvent être utilisées à d'autres fins que leur traitement en vue d'orienter l'intervenant, par exemple à des fins d'enregistrement.

On décrira ci-après deux exemples de réalisation d'un dispositif conforme à l'invention en référence aux figures du dessin joint sur lequel:
- la figure 1 est une vue de principe du premier exemple de réalisation ;
- la figure 2 est un schéma bloc d'un dispositif intégrant une réalisation du type de la figure 1 ;
- la figure 3 est un schéma de principe d'un second exemple de réalisation ; et
- la figure 4 est une vue schématique d'une visière permettant à l'intervenant de s'orienter en fonction des indications des compteurs.

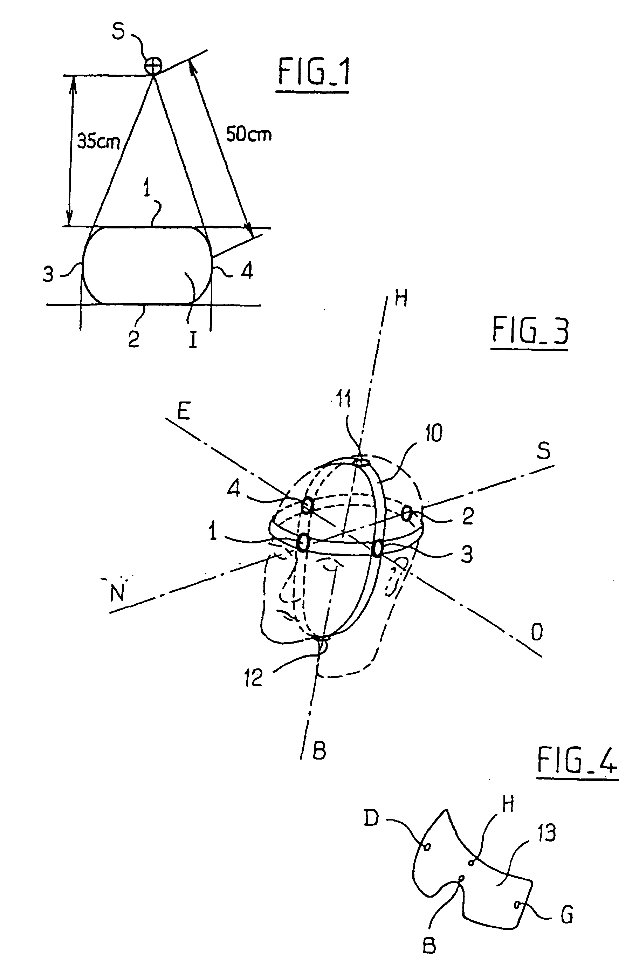

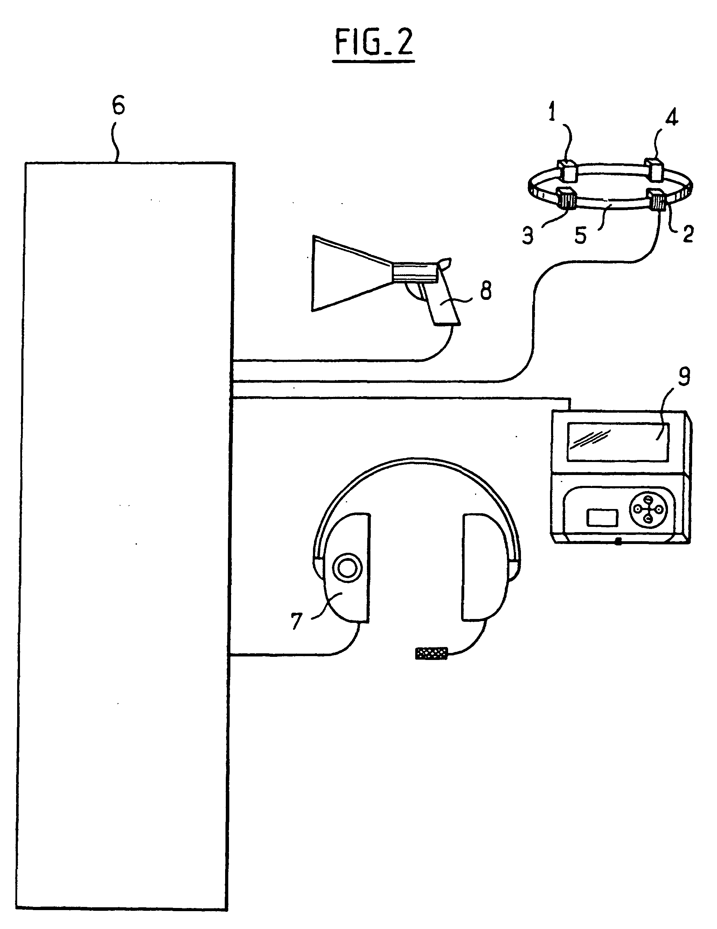

Le schéma représenté sur la figure 1 est une coupe horizontale au niveau de la ceinture d'un intervenant sur laquelle on a représenté quatre compteurs Geiger-Muller (GM) omnidirectionnels deux à deux situés en opposition et deux à deux situés en quadrature.

On utilise des compteurs Geiger-Mûller bien connus en soi et que l'on trouve dans des dimensions permettant facilement d'en équiper l'intervenant.

Si l'ambiance de contamination est uniforme, les quatre détecteurs seront sollicités de la même façon tandis que si la source de contamination est une source ponctuelle (S) les compteurs seront sollicités de façon différente selon leurs positions par rapport à la source.

### Exemple :

On suppose que l'intervenant standard fait 40 cm de large et 27 cm d'épaisseur. Les calculs montrent que les petites différences rencontrées dans les mesures de l'homme standard modifient peu les résultats. Rien n'empêche dans le programme de créer une formule pour créer un standard.

On utilise comme référence une source de cobalt 60 de 0,1 ci dans une tuyauterie en métal de 1cm d'épaisseur. Dans la pratique réelle, le mélange des sources rencontré lors des arrêts a un gamma moyen bien moins énergétique ce qui engendrera un rapport différentiel bien plus important.

A 35 cm de la source, l'intervenant étant supposé positionné devant cette source, (position rationnelle d'un poste de travail), le débit de dose indiquée par le GM 1 est 887 mRem/h. Le débit de dose indiqué par le GM2 situé dans son dos, c'est à dire à 62cm de la source, est de 135 mRem/h. La différence entre les deux débits est due à la distance et surtout aux 27 cm du corps humain. A 62 cm dans l'air, le débit de dose est de 289mRem/h.

Les valeurs des débits de dose mesurées par les GM 3 et 4 positionnées sur les côtés, c'est à dire à 50 cm de la source, sont de 441 mRem/h.

| | Source de 0,1 Ci de Co 60 | Source mélangée de 0,1Ci |
|---|---|---|
| Débit de dose à 7 cm de la source ponctuelle | 14,2 mRem/h | 10,5 mRem/h |
| Débit de dose à 35 cm de la source ponctuelle | 887 mRem/h | 520 mRem/h |
| Débit de dose au dos du porteur soit 62 cm de la source | 135 mRem/h | 75 mRem/h |
| Débit de dose sur le côté de l'agent soit 50 cm | 441 mRem/h | 259 mRem/ |
| Débit de dose à 63 cm dans l'air | 289 mRem/h | 170 mRem/h |

La comparaison des indications fournies par les capteurs permet de déterminer dans quel plan vertical se situe la source par rapport à l'intervenant. Cette détermination peut être effectuée par un calculateur, mais dans une réalisation plus simple, il suffit à l'intervenant de se déplacer et/ou de tourner sur lui-même jusqu'à ce que les capteurs latéraux (3 ; 4) fournissent la même indication tandis que les capteurs avant et arrière (1 ; 2) fournissent une indication maximale et une indication minimale, auquel cas l'intervenant sait qu'il se trouve dans la configuration de la figure 1 et que la source se trouve devant lui.

S'il dispose de plus, comme dans la réalisation de la figure 3 de deux capteurs supplémentaires situés en opposition sur son axe vertical lié à la tête, il lui est possible de viser exactement la position de la source en levant ou en abaissant la tête jusqu'à ce que ces deux capteurs fournissent des informations identiques. En équipant l'intervenant d'une caméra vidéo placée au niveau de sa tête, on peut suivre à distance et enregistrer en permanence ce que voit l'intervenant tout en relevant les doses reçues par les compteurs.

Les considérations théoriques qui précèdent supposent que la source est ponctuelle, que le corps de l'intervenant est parfaitement symétrique par rapport à l'axe du corps et que la tête de l'intervenant peut être assimilée à une sphère.

Le système peut être étalonné pour tenir compte des dissymétries éventuelles ou cette prise en compte peut être effectuée au niveau du calculateur.

La figure 2 est le schéma d'un ensemble fonctionnant à partir d'une ceinture (5) à quatre compteurs Geiger-Muller omnidirectionnels.

Les informations fournies par ces compteurs sont envoyées à un calculateur (6) qui traite les informations fournies par les compteurs de façon à évaluer la direction de la source et le calculateur ou un opérateur envoie une information correspondante à l'intervenant, par l'intermédiaire d'un casque vidéo et sono (7) porté par l'intervenant, lequel est ainsi guidé oralement dans la direction dans laquelle la source se trouve par rapport à lui.

Le système peut être complété par des matériels annexes, notamment un pistolet vidéo et dosimétrique (8) tenu par l'intervenant et relié au calculateur, et un magnétoscope portable (9).

Le pistolet permet notamment de lire en vidéo les étiquettes de repérage du matériel vers lequel il est braqué par l'intervenant, de mesurer le débit de doses à quelques centimètres de ce matériel et d'avoir un référentiel dosimétrique du matériel.

Le magnétoscope porté par l'intervenant permet d'enregistrer des données de la ceinture dosimétrique et du pistolet afin de permettre une analyse a posteriori du mode opératoire.

La figure 3 représente une variante de réalisation dans laquelle l'intervenant est équipé d'un harnais de la tête (10) qui porte d'une part quatre compteurs omnidirectionnels (1, 2, 3, 4) deux à deux en opposition et deux à deux en quadrature situés dans un plan perpendiculaire à l'axe vertical de la tête (supposée droite), à un niveau passant entre le nez et le front, et deux autres compteurs omnidirectionnels (11, 12) situés sur cet axe respectivement sur le sommet de la tête et sous le menton.

Comme dans le cas de la figure 2, les compteurs peuvent être reliés à un calculateur situé à distance et qui, à partir des informations fournies par les compteurs élabore et renvoie à l'intervenant ou à un opérateur les informations sur la direction de la source par rapport à l'intervenant.

En variante, les compteurs sont par exemple reliés à une visière (fig.4) qui présente quatre zones, à savoir respectivement une zone à gauche et une zone à droite (G, D), une zone supérieure et une zone inférieure (H, B) qui sont munies de moyens aptes à fournir des indications visuelles représentatives des doses reçues respectivement par les deux compteurs de l'un ou de l'autre des couples de compteurs deux à deux alignés (1, 2 ; 3, 4) et des doses reçues par les compteurs (11) et (12).

L'intervenant sait qu'il regarde dans la direction de la source quand les indications fournies en (G) et en (D) sont identiques l'une à l'autre et quand les indications fournies et (H) et en (B) sont également identiques l'une à l'autre.

L'invention n'est pas limitée à ces modes de réalisation.

## Revendications

1. Procédé pour localiser une source radioactive ponctuelle (S) dans un site contaminé, dans lequel on équipe un individu intervenant (I) sur le site d'une pluralité de détecteurs de radioactivité (1, 2, 3, 4, 11, 12) répartis sur son corps à des emplacements tels que deux détecteurs au moins reçoivent des doses de radiation dont la différence est due essentiellement à l'écran constitué par le corps de l'intervenant (I) et on compare les doses de radiation reçues simultanément par les détecteurs (1, 2, 3, 4, 11, 12), **caractérisé en ce qu'**on utilise comme détecteurs des compteurs (1, 2, 3, 4, 11, 12) aptes à fournir des signaux électriques correspondant aux doses de rayonnement reçues par les compteurs (1, 2, 3, 4, 11, 12) et **en ce qu'**on exploite ces signaux pour en déduire une information sur la direction de la source (S) par rapport à l'intervenant.

2. Procédé selon la revendication 1, dans lequel on place des compteurs (1, 2, 3, 4) dans un plan horizontal autour du corps de l'intervenant (I).

3. Procédé selon la revendication 2, dans lequel on dispose des compteurs (1, 2, 3, 4) en sorte qu'ils soient deux à deux symétriquement disposés par rapport à un axe vertical autour duquel l'intervenant peut tourner sur lui-même.

4. Procédé selon la revendication 3, dans lequel on place quatre compteurs (1, 2, 3, 4) autour dudit axe vertical en sorte que vus de cet axe, les compteurs (1, 2, 3, 4) soient deux à deux dans des directions opposées et deux à deux dans des directions orthogonales.

5. Procédé selon l'une des revendications 1 à 4, dans lequel on place des compteurs (11, 12) respectivement au-dessus de la tête et au-dessous du menton de l'intervenant (I).

6. Procédé selon la revendication 1, dans lequel on envoie les signaux des compteurs (1, 2, 3, 4, 11, 12) à une centrale à l'extérieur du site pour les collecter et les exploiter.

7. Procédé selon la revendication 6, dans lequel on indique en permanence à l'intervenant les doses reçues simultanément par les compteurs (1, 2, 3, 4, 11, 12).

8. Procédé selon la revendication 7, dans lequel ladite indication est visuelle.

9. Dispositif pour localiser une source radioactive ponctuelle (S) dans un site contaminé par rapport à un individu intervenant (I) sur le site, qui comprend un pluralité de détecteurs (1, 2, 3, 4, 11, 12) sensibles au rayonnement de la source (S) et des moyens (5, 10) pour répartir ces détecteurs (1, 2, 3, 4, 11, 12) sur le corps de l'intervenant (I) en sorte qu'ils se trouvent dans des positions relatives déterminées, séparées les unes des autres par le corps de l'intervenant (I), **caractérisé en ce que** lesdits détecteurs sont des compteurs (1, 2, 3, 4, 11, 12) aptes à fournir des signaux électriques correspondant aux doses de rayonnement reçues par les compteurs (1, 2, 3, 4, 11, 12) et **en ce que** le dispositif comprend des moyens (6, 7, 13) reliés aux compteurs (1, 2, 3, 4, 11, 12) pour recevoir les signaux électriques des compteurs (1, 2, 3, 4, 11, 12) et les transformer en informations permettant à l'intervenant (I) de s'orienter vers la source (S).

10. Dispositif selon la revendication 9, dans lequel le dispositif comporte des compteurs (1, 2, 3, 4) répartis dans un plan horizontal autour du corps de l'intervenant (I).

11. Dispositif selon la revendication 10, dans lequel les compteurs répartis dans un plan horizontal comprennent quatre compteurs (1, 2, 3, 4) deux à deux en opposition et deux à deux en quadrature par rapport à l'axe vertical du corps de l'intervenant (I).

12. Dispositif selon l'une des revendications 9 à 11, et qui comprend des compteurs (1, 2, 3, 4) répartis dans un plan horizontal sur une ceinture ventrale (5).

13. Dispositif selon la revendication 9 et qui comporte un harnais de tête (10) équipé de compteurs (1, 2, 3, 4) répartis dans un plan horizontal perpendiculaire à l'axe de la tête supposée droite et de compteurs (11, 12) situés sur cet axe, respectivement sur le sommet de la tête et sous le menton.

14. Dispositif selon la revendication 9 dont les compteurs (1, 2, 3, 4, 11, 12) sont omnidirectionnels.

15. Dispositif selon la revendication 9 et qui comprend un écran (13) placé devant les yeux de l'intervenant de façon à suivre le mouvement de sa tête, cet écran (13) présentant des zones (D, G, H, B) représentant les dispositions relatives des compteurs (1, 2, 3, 4, 11, 12) et sur lesquelles s'affichent des indications représentatives des doses reçues par les compteurs (1, 2, 3, 4, 11, 12).

## Claims

1. A method of locating a point source (S) of radioactivity in a contaminated site, in which a person (I) intervening on the site is fitted with a plurality of radioactivity detectors (1, 2, 3, 4, 11, 12) distributed over the body at locations such that at least two detectors receive doses of radiation that differ essentially because of the screen constituted by the body of the intervener (I), and the radiation doses that are received simultaneously by the detectors (1, 2, 3, 4, 11, 12) are compared, the method being **characterized in that** the detectors used are meters (1, 2, 3, 4, 11, 12) suitable for delivering electrical signals corresponding to the doses of radiation received by the meters (1, 2, 3, 4, 11, 12), and **in that** the signals are used so as to deduce therefrom information concerning the direction of the source (S) relative to the intervener.

2. A method according to claim 1, in which meters (1, 2, 3, 4) are placed in a horizontal plane around the body of the intervener (I).

3. A method according to claim 2, in which meters (1, 2, 3, 4) are placed so as to be disposed symmetrically in pairs about a vertical axis around which the intervener (I) can turn.

4. A method according to claim 3, in which four meters (1, 2, 3, 4) are placed around a vertical axis such that seen from said axis, the meters (1, 2, 3, 4) are located in pairs in opposite directions and in pairs in orthogonal directions.

5. A method according to any one of claims 1 to 4, in which meters (11, 12) are placed respectively above the head and below the chin of the intervener (I).

6. A method according to claim 1, in which the signals from the meters (1, 2, 3, 4, 11, 12) are sent to a center outside the site for collection and processing purposes.

7. A method according to claim 6, in which the doses received simultaneously by the meters (1, 2, 3, 4, 11, 12) are continuously indicated to the intervener.

8. A method according to claim 7, in which said indication is visible.

9. Apparatus for locating a point source (S) of radiation in a contaminated site relative to a person (I) intervening on the site, which apparatus comprises a plurality of detectors (1, 2, 3, 4, 11, 12) responsive to the radiation from the source (S), and means (5, 10) for distributing the detectors (1, 2, 3, 4, 11, 12) over the body of the intervener (I) so that they are located in determined relative positions and separated from one another by the body of the intervener (I), the apparatus being **characterized in that** said detectors are meters (1, 2, 3, 4, 11, 12) suitable for delivering electrical signals corresponding to the doses of radiation received by the meters (1, 2, 3, 4, 11, 12), and **in that** the apparatus includes means (6, 7, 13) connected to the meters (1, 2, 3, 4, 11, 12) to receive the electrical signals from the meters (1, 2, 3, 4, 11, 12) and to transform them into information enabling the intervener (I) to look towards the source (S).

10. Apparatus according to claim 9, in which the apparatus includes meters (1, 2, 3, 4) distributed in a horizontal plane around the body of the intervener (I).

11. Apparatus according to claim 10, in which the meters distributed in a horizontal plane comprise four meters (1, 2, 3, 4) that are opposite in pairs and in quadrature in pairs about the vertical axis of the body of the intervener (I).

12. Apparatus according to any one of claims 9 to 11, and comprising meters (1, 2, 3, 4) distributed in a horizontal plane on a waist belt (5).

13. Apparatus according to claim 9 comprising a head harness (10) fitted with meters (1, 2, 3, 4) distributed in a horizontal plane perpendicular to the axis of the head when held vertical, and meters (11, 12) situated on said vertical axis, one on top of the head and the other beneath the chin.

14. Apparatus according to claim 9, in which the meters (1, 2, 3, 4, 11, 12) are omnidirectional.

15. Apparatus according to claim 9, and comprising a screen (13) placed in front of the eyes of the observer so as to follow movement of the intervener's head, said screen having zones (D, G, H, B) representing the relative dispositions of the meters (1, 2, 3, 4, 11, 12) and on which there are displayed indications representative of the doses being received by the meters (1, 2, 3, 4, 11, 12).

## Patentansprüche

1. Verfahren zum Lokalisieren einer punktförmigen radioaktiven Quelle (S) in einer kontaminierten Umgebung, bei welchem man eine in die Umgebung intervenierende Person (I) mit mehreren Radioaktivitätsdetektoren (1, 2, 3, 4, 11, 12) ausstattet, die auf verschiedenen Stellen ihres Körpers derart verteilt sind, daß wenigstens zwei Detektoren Strahlendosen erhalten deren Differenz im wesentlichen durch die Abschirmung des Körper des Intervenierers (I) verursacht wird, und man die gleichzeitig von den Detektoren (1, 2, 3, 4, 11, 12) erhaltenen Strahlendosen vergleicht, **dadurch gekennzeichnet, daß** man als Detektoren Zähler (1, 2, 3, 4, 11, 12) verwendet, die elektrische Signale liefern können, die den durch die Zähler (1, 2, 3, 4, 11, 12) erhaltenen Strahlendosen entsprechen; und daß man diese Signale auswertet, um Informationen über die Richtung der Quelle (S) bezüglich des Intervenierers abzuleiten.

2. Verfahren nach Anspruch 1, bei welchem man die Zähler (1, 2, 3, 4) auf einer horizontalen Ebene um den Körper des Intervenierers (I) herum platziert.

3. Verfahren nach Anspruch 2, bei welchem man die Zähler (1, 2, 3, 4) derart anordnet, daß sie paarweise symmetrisch bezüglich einer vertikalen Achse, um die sich der Interveniererende (I) drehen kann, angeordnet sind.

4. Verfahren nach Anspruch 3, bei welchem man vier Zähler (1, 2, 3, 4) um die vertikale Achse so von der Achse aus gesehen platziert, daß die Zähler (1, 2, 3, 4) sich paarweise in gegenüber liegenden Richtungen, sowie paarweise in orthogonalen Richtungen befinden.

5. Verfahren nach einem der Ansprüche 1 bis 4, bei welchem man die Zähler (11, 12) auf dem Kopf bzw. unterhalb des Kinns des Intervenierers (I) platziert.

6. Verfahren nach Anspruch 1, bei welchem man die Signale der Zähler (1, 2, 3, 4, 11, 12) zu einer außerhalb der Umgebung befindlichen Zentralstelle schickt, um diese zu sammeln und auszuwerten.

7. Verfahren nach Anspruch 6, bei welchem man ständig dem Intervenierer die gleichzeitig von den Zählern (1, 2, 3, 4, 11, 12) erhaltenen Dosen anzeigt.

8. Verfahren nach Anspruch 7, bei welchem die Anzeige eine Sichtanzeige ist.

9. Vorrichtung zur Lokalisierung einer punktförmigen radioaktiven Quelle (S) in einer kontaminierten Umgebung bezüglich einer in die Umgebung intervenierende Person (I), umfassend: mehrere Detektoren (1, 2, 3, 4, 11, 12), die empfindlich auf die Strahlung der Quelle (S) sind, und Mittel (5, 10) zur Verteilung der Detektoren (1, 2, 3, 4, 11, 12) auf dem Körper des Intervenierers (I) so, daß sie sich auf bestimmten Relativpositionen, voneinander durch den Körper des Intervenierers (I) getrennt, befinden, **dadurch gekennzeichnet, daß** die Detektoren (1, 2, 3, 4, 11, 12) Zähler sind, die elektrische Signale liefern können, die den von den Zählern (1, 2, 3, 4, 11, 12) erhaltenen Strahlendosen entsprechen, und daß die Vorrichtung mit den Zählern (1, 2, 3, 4, 11, 12) verbundene Mittel (6, 7, 13) umfaßt, um die elektrischen Signale der Zähler (1, 2, 3, 4, 11, 12) zu empfangen und sie in Informationen umzuwandeln, die es dem Intervenierer (I) ermöglichen sich auf die Quelle (S) auszurichten.

10. Vorrichtung nach Anspruch 9, bei der die Vorrichtung Zähler (1, 2, 3, 4) umfaßt, die auf einer horizontalen Ebene um den Körper des Intervenierers (I) herum verteilt sind.

11. Vorrichtung nach Anspruch 10, bei der die Zähler in einer horizontalen Ebene, die vier Zähler (1, 2, 3, 4) enthält, verteilt sind und die Zähler paarweise gegenüber und paarweise nebeneinander bezüglich einer vertikalen Achse des Körpers des Intervenierers (I) verteilt sind.

12. Vorrichtung nach einem der Ansprüche 9 bis 11, die auf einer horizontalen Ebene auf einem Bauchgürtel (5) verteilte Zähler (1, 2, 3, 4) umfaßt.

13. Vorrichtung nach Anspruch 9, die einen Kopfgurt (10) umfaßt, der ausgerüstet ist mit Zählern (1, 2, 3, 4), die auf einer horizontalen Ebene rechtwinklig zu einer gerade durch den Kopf angenommen Achse verteilt sind, sowie mit Zählern (11, 12) die auf dieser Achse bzw. auf der Spitze des Kopfs und unter dem Kinn, platziert sind.

14. Vorrichtung nach Anspruch 9, bei dem die Zähler omnidirektional (1, 2, 3, 4, 11, 12) sind.

15. Vorrichtung nach Anspruch 9, die einen Schirm (13) umfaßt, der vor den Augen des Intervenierers (I) so platziert ist, daß er den Bewegungen seines Kopfes folgt, wobei dieser Schirm (13) Zonen (D, G, H, B) aufweist, die Einrichtungen darstellen, die mit den Zählern (1, 2, 3, 4, 11, 12) in Bezug stehen, und auf denen Angaben angezeigt werden, die den von den Zählern (1, 2, 3, 4, 11, 12) erhaltenen Dosen entsprechen.
